# EUROPÄISCHE PATENTANMELDUNG

(11) **EP 3 686 047 A1**
(43) Veröffentlichungstag der Anmeldung: **29.07.2020**
(21) Anmeldenummer: 19215153.8
(22) Anmeldetag: 11.12.2019
(51) Int. Cl.: B60L 53/16, B60L 53/18, H02J 50/80, H01B 7/00, H01R 13/66, H01R 13/68, H01R 13/713

(54) **LADEKABEL**

(30) Priorität: 24.01.2019 DE 102019200870
(71) Anmelder: Audi AG, 85045 Ingolstadt (DE)
(72) Erfinder: Zaki, Sami Robert, 93053 Regensburg (DE)

(57) **Zusammenfassung**

Ladekabel umfassend einen Gleichrichter (5) sowie ein erstes Anschlusselement (2) und ein zweites Anschlusselement (3), wobei das erste Anschlusselement (2) zum Verbinden mit einer fahrzeugexternen Energiequelle und das zweite Anschlusselement (3) zum Verbinden mit einer Ladebuchse eines einen elektrischen Traktionsenergiespeicher umfassenden Kraftfahrzeugs ausgebildet ist, wobei durch den Gleichrichter ein an dem ersten Anschlusselement (2) eingespeister Wechselstrom in einen an dem zweiten Anschlusselement (3) abgebbaren Gleichstrom wandelbar ist, wobei das erste Anschlusselement (2) über eine Schnittstelle (11) des Ladekabels (1) lösbar an dem Ladekabel (1) befestigt ist.

## Beschreibung

Die Erfindung betrifft ein Ladekabel umfassend einen Gleichrichter sowie ein erstes Anschlusselement und ein zweites Anschlusselement, wobei das erste Anschlusselement zum Verbinden mit einer fahrzeugexternen Energiequelle und das zweite Anschlusselement zum Verbinden mit einer Ladebuchse eines einen elektrischen Traktionsenergiespeicher umfassenden Kraftfahrzeugs ausgebildet ist, wobei durch den Gleichrichter ein an dem ersten Anschlusselement eingespeister Wechselstrom in einen an dem zweiten Anschlusselement abgebbaren Gleichstrom wandelbar ist.

Kraftfahrzeuge, welche eine elektrische Traktionsbatterie umfassen, werden auch als Elektrofahrzeuge bezeichnet. Derartige Elektrofahrzeuge werden in der Regel über das allgemeine Stromnetz bzw. das Niederspannungsnetz geladen. Dazu muss ein vom Stromnetz gelieferter Wechselstrom bzw. eine vom Stromnetz gelieferte Wechselspannung in einen Gleichstrom bzw. eine Gleichspannung umgewandelt werden, um die Traktionsbatterie des Elektrofahrzeuges laden zu können. Diese Wandlung kann beispielsweise durch ein Ladegerät, welches eine Gleichrichtung umfasst, erfolgen. Als Lademöglichkeiten des Elektrofahrzeugs stehen Gleichstromladen (DC-Laden) und Wechselstrom laden (AC-Laden) zur Verfügung. Für DC-Laden geeignete Elektrofahrzeuge weisen in der Regel einen DC-Anschluss auf, über welchen sie mit einer fahrzeugexternen DC-Ladestation verbunden werden können. Ein den im Stromnetz verwendeten Wechselstrom gleichrichtender Gleichrichter ist dabei in der fahrzeugexternen Ladestation verbaut.

Beim AC-Laden wird ein AC-Anschuss des Kraftfahrzeuges mit einer AC-Ladestation oder einer AC-Stromquelle verbunden. Eine Gleichrichtung des Wechselstroms bzw. der Wechselspannung erfolgt dabei über einen im Fahrzeug verbauten Gleichrichter, welcher in der Regel Teil eines im Kraftfahrzeug verbauten Ladegerätes ist. Derartige im Kraftfahrzeug verbaute Ladegeräte haben typischerweise Ladeleistungen zwischen 3,6 kW und 44 kW. Bei externen Ladegeräten, so wie sie in DC-Ladesäulen verbaut sind, können Leistungen bis zu 350 kW erreicht werden.

Beim AC-Laden wird unter anderem zwischen sogenanntem Mode-2-Laden und sogenannten Mode-3-Laden unterschieden (internationale Norm IEC 61851). Beim Mode-2-Laden, bei dem das Kraftfahrzeug an einer einphasigen oder mehrphasigen Wechselstromquelle geladen wird, kann ein Kabel mit einer beispielsweise als In-cable control box (ICCB) ausgeführten integrierten Steuer- und Schutzschaltung verwendet werden (internationale Norm IEC 62752). Beim Mode-3-Laden wird als Wechselstromquelle eine Wallbox und/oder eine Standsäule verwendet. Ein Anschuss der jeweiligen Wechselstromquelle an das Kraftfahrzeug erfolgt über ein Kabel, mit welchem die Wechselstromquelle mit dem im Kraftfahrzeug verbauten Ladegerät verbunden wird. Das Ladegerät im Fahrzeug ist mit dem AC-Anschluss bzw. einer einen AC-Anschluss umfassenden Ladebuchse des Kraftfahrzeugs und mit dem Hochvolt-Gleichspannungsnetzwerk des Kraftfahrzeuges verbunden. Da derartige Ladegeräte insbesondere bei hohen Ladeleistungen eine erhebliche Baugröße aufweisen und aufgrund der umgesetzten elektrischen Leistungen eine Kühlung, beispielsweise über einen Anschluss an das Kühlsystem des Kraftfahrzeuges, erfordern, ist es wünschenswert, auf derartige kraftfahrzeugseitige Ladegeräte zu verzichten, insbesondere, da sie für das DC-Laden nicht benötigt werden.

Da bei steigender Verfügbarkeit von privaten und öffentlichen DC-Ladesäulen aufgrund der von ihnen ermöglichten höheren Ladeleistungen das Laden über AC-Lademöglichkeiten und somit die Einsatzhäufigkeit des im Fahrzeug integrierten Ladegerätes abnimmt, ist es wünschenswert, Lademöglichkeiten für Wechselstromquellen zu schaffen, welche auf einen im Fahrzeug integrierten Gleichrichter verzichten können. Dazu sind verschiedene Möglichkeiten aus dem Stand der Technik bekannt.

So beschreibt DE 10 2015 207 400 A1 eine Kabelaufwickelvorrichtung nebst Übertrager zum Laden und/oder Entladen von Akkumulatoren von Elektrofahrzeugen. Die Vorrichtung umfasst einen feststehenden und einen drehbaren Teil, wobei der drehbare Teil zum Aufwickeln eines Ladekabels mit einem Ladestecker vorgesehen ist und der feststehende Teil einen Anschluss zur Verbindung mit einem Stromnetz aufweist. Dabei sind der drehbare Teil und der feststehende Teil über einen elektrischen Übertrager elektrisch miteinander verbunden. Weiterhin ist in der Aufwickelvorrichtung eine Leistungselektronik integriert, welche die aus einem Dreiphasen-Wechselspannungsnetz aufgenommene Wechselspannung in eine Gleichspannung zum Laden von Akkumulatoren und Fahrzeugbatterien umwandelt.

In DE 10 2016 106 840 A1 wird eine Energieübertragungsvorrichtung mit einem Energieaufnahmeanschluss und einem Energieabgabeanschluss beschrieben. Die Vorrichtung kann über den Energieaufnahmeanschluss mit einem Spender-Elektrofahrzeug oder einer Elektrofahrzeug-Ladestation gekoppelt werden. Über den Energieabgabeanschluss kann die Vorrichtung mit einem zu ladenden Elektrofahrzeug verbunden werden. Die Energieübertragungsvorrichtung kann mit einem Stromrichter ausgestattet sein, welcher zur elektrischen Umwandlung der am Energieaufnahmeanschuss empfangenen Energie vor der Bereitstellung am Energieabgabeanschluss ausgebildet ist. Da die zum Laden des Kraftfahrzeugs eingesetzten Ladekabel in der Regel im Kraftfahrzeug mitgeführt werden, ist es wünschenswert, wenn diese möglichst klein und möglichst leicht sind.

Der Erfindung liegt daher die Aufgabe zugrunde, ein möglichst vielfältig einsetzbares Ladekabel anzugeben, welches insbesondere ein Laden ohne ein fahrzeugseitig verbautes Ladegerät ermöglicht.

Zur Lösung dieser Aufgabe ist erfindungsgemäß vorgesehen, dass das erste Anschlusselement über eine Schnittstelle des Ladekabels lösbar an dem Ladekabel befestigt ist. Dies ermöglicht es vorteilhaft, dass verschiedenartige erste Anschlusselemente bereitgehalten werden können, wobei das jeweils für eine zur Verfügung stehende Energiequelle zu verwendende erste Anschlusselement über die Schnittstelle mit dem Ladekabel verbunden werden kann. Dies hat den Vorteil, dass das Ladekabel und insbesondere der im Ladekabel verbaute Gleichrichter für verschiedenartige Ladeszenarien verwendet werden können. Es wird somit insbesondere ermöglicht, das Ladekabel über entsprechende erste Anschlusselemente mit einphasigen, zweiphasigen oder dreiphasigen fahrzeugexternen Wechselstromquellen zu verbinden.

Der Gleichrichter des Ladekabels kann eine Steuereinrichtung umfassen, über welche der Betrieb des Gleichrichters steuerbar ist. Aufgrund des im Ladekabel vorgesehenen Gleichrichters kann auf einen Gleichrichter bzw. ein Ladegerät im Kraftfahrzeug verzichtet werden. Dies hat den Vorteil, dass durch den Verzicht auf ein kraftfahrzeugseitiges Ladegerät das Fahrzeuggewicht reduziert werden kann. Weiterhin stellt das erfindungsgemäße Ladekabel ein Zubehörbauteil und kein integriertes Bauteil des Kraftfahrzeuges dar, was es beispielsweise erleichtert, das Ladekabel an verschiedene, regional zur Verfügung stehende Energiequellen und/oder verschiedene regional gültige Vorschriften anzupassen.

Das zweite Anschlusselement dient zum Verbinden des Ladekabels mit einer Ladebuchse, insbesondere einer Gleichstrom-Ladebuchse, eines einen elektrischen Traktionsenergiespeicher umfassenden Kraftfahrzeugs. Das zweite Anschlusselement kann dazu beispielsweise als CCS-Stecker oder als CHAdeMO-Stecker ausgeführt sein.

Erfindungsgemäß kann vorgesehen sein, dass das erste Anschlusselement wenigstens einen Widerstand als Widerstandskodierung aufweist, wobei der Gleichrichter in Abhängigkeit des Widerstandswerts des wenigstens einen Widerstands betreibbar ist. Dazu kann beispielsweise eine den Betrieb des Gleichrichters steuernde Steuerungseinrichtung über eine oder mehrere Auswerteleitungen mit dem Anschlusselement verbunden sein, so dass der im ersten Anschlusselement als Widerstandskodierung vorgesehene Widerstand ausgelesen werden kann. Das erste Anschlusselement kann als ein mit einem Wechselstromnetzwerk verbindbarer Stecker ausgebildet sein. Ein derartiger Stecker kann sich abhängig von der Art des Wechselstromnetzwerks unterscheiden. Bei einem einphasigen Wechselspannungsnetzwerk kann beispielsweise ein Schukostecker als erstes Anschlusselement eingesetzt werden. Bei zwei- oder dreiphasigen Systemen ist beispielsweise eine Verwendung eines CEE-Steckers denkbar. Durch das Vorsehen des wenigstens einen Widerstandes als Widerstandskodierung in dem ersten Anschlusselement kann der Typ des ersten Anschlusselementes und/oder die Art des Wechselstromnetzwerks erfasst werden, so dass der Gleichrichter entsprechend des Wechselstromnetzwerk, insbesondere in Abhängigkeit der Anzahl der Phasen des Wechselstromnetzwerks, betrieben werden kann.

Erfindungsgemäß kann vorgesehen sein, dass die Schnittstelle als eine Kupplung ausgeführt ist. Die Kupplung kann zwei koppelbare Kupplungsabschnitte, beispielsweise einen Stecker oder eine Buchse, aufweisen, durch welche eine lösbare Befestigung des ersten Anschlusselements an dem Ladekabel möglich ist. Dabei kann ein Kupplungsabschnitt mit dem ersten Anschlusselement verbunden sein und der zweite Kupplungsabschnitt mit dem zweiten Anschlusselement und/oder einem Kabelabschnitt des Ladekabels. Die Kupplung kann eine Befestigungsvorrichtung aufweisen, beispielsweise einen Bajonettverschluss oder ineinander einrastende oder ineinander einschiebbare Stecker bzw. Buchsen. Es ist dabei möglich, dass zwischen der Schnittstelle und dem ersten Anschlusselement bzw. zwischen der Schnittstelle und dem zweiten Anschlusselement jeweils ein Kabelabschnitt des Ladekabels angeordnet ist, so dass die Schnittstelle mit dem ersten Anschlusselement und dem zweiten Anschlusselement jeweils über einen Kabelabschnitt verbunden ist.

Erfindungsgemäß kann auch vorgesehen sein, dass die Schnittstelle an dem ersten Anschlusselement angeordnet ist. Dies ermöglicht es, dass verschiedene Anschlusselemente direkt an der Schnittstelle lösbar befestigt werden können, so dass neben dem Ladekabel lediglich verschiedene Typen von ersten Anschlusselementen für ein Laden an verschiedenen fahrzeugexternen Energiequellen mitgeführt werden müssen. Das zweite Anschlusselement und/oder ein oder mehrere Kabelabschnitte des Ladekabels können dabei unabhängig von dem gewählten ersten Anschlusselement verwendet werden. Die Schnittstelle kann dabei als Kupplung ausgeführt sein, wobei ein Kupplungsabschnitt der Kupplung in das erste Anschlusselement integriert sein kann.

Alternativ kann es erfindungsgemäß vorgesehen sein, dass die Schnittstelle an einem eine Schutzschaltung aufnehmenden, in das Ladekabel integrierten und mit dem zweiten Anschlusselement fest verbundenen Aufnahmeabschnitt des Ladekabels angeordnet ist. Bei dem Aufnahmeabschnitt des Ladekabels kann es sich beispielsweise um eine sogenannten In-Cable-Control-Box (ICCB) handeln. Die in dem Aufnahmeabschnitt aufgenommene Schutzschaltung kann beispielsweise ein Mittel zur galvanischen Trennung und/oder wenigstens eine elektrische Sicherheitsschaltung, beispielsweise eine Strombegrenzungsschaltung und/oder einen FI-Schalter oder eine Sicherung, umfassen. Es ist möglich, dass der Gleichrichter des Ladekabels ebenfalls in dem Aufnahmeabschnitt angeordnet ist. Der Aufnahmeabschnitt des Ladekabels kann mit dem zweiten Anschlusselement insbesondere über einen Kabelabschnitt des Ladekabels fest verbunden sein. Das erste Anschlusselement kann lösbar oder fest mit einem ersten Ende eines weiteren Kabelabschnitts verbunden sein, wobei das zweite Ende des weiteren Kabelabschnitts mit der an dem Aufnahmeabschnitt angeordneten Schnittstelle verbunden ist. Es ist möglich, dass der Aufnahmeabschnitt von einem Gehäuse umgeben wird, um die in ihm angeordneten Komponenten des Ladekabels zu schützen.

Alternativ kann erfindungsgemäß vorgesehen sein, dass die Schnittstelle an dem zweiten Anschlusselement angeordnet ist. Eine Verbindung der Schnittstelle mit dem ersten Anschlusselement oder einem gegebenenfalls vorhandenen Aufnahmeabschnitt des Ladekabels kann dabei über einen Kabelabschnitt des Ladekabels erfolgen.

In einer bevorzugten Ausgestaltung der Erfindung kann vorgesehen sein, dass der Gleichrichter in einem Gehäuse des zweiten Anschlusselements angeordnet ist. Dies ermöglicht eine platzsparende Ausführung des Ladekabels. Bei einem in dem Gehäuse des zweiten Anschlusselements angeordneten Gleichrichter kann bei einer an dem zweiten Anschlusselement angeordneten Schnittstelle jeweils ein mit einem Kabelabschnitt des Ladekabels fest verbundenes erstes Anschlusselement lösbar mit dem zweiten Anschlusselement bzw. mit dem in dem Gehäuse des zweiten Anschlusselements angeordneten Gleichrichter verbunden werden. Es ist auch möglich, dass das zweite Anschlusselement mit einem ersten Ende eines Kabelabschnitts fest verbunden ist, wobei die Schnittstelle an dem zweiten Ende des Kabelabschnitts angeordnet und mit dem ersten Anschlusselement lösbar verbunden ist.

Erfindungsgemäß kann vorgesehen sein, dass wenigstens ein Mittel zur galvanischen Trennung und/oder wenigstens eine elektrische Sicherheitsschaltung in dem Gehäuse des zweiten Anschlusselements angeordnet sind. Die in dem Aufnahmeabschnitt aufgenommene Sicherheitsschaltung kann beispielsweise eine Strombegrenzungsschaltung und/oder einen FI-Schalter oder eine Sicherung, umfassen. Die Anordnung des Mittels zur galvanischen Trennung und/oder der Schutzschaltung in dem Gehäuse des zweiten Anschlusselements ermöglicht es, die beispielsweise durch die In-Cable-Control-Box zur Verfügung gestellte Funktionalität ebenfalls in dem Gehäuse des zweiten Anschlusselements zu integrieren. Dadurch kann vorteilhaft auf eine In-Cable-Control-Box bzw. einen Aufnahmeabschnitt des Ladekabels verzichtet werden.

Für den Gleichrichter kann erfindungsgemäß vorgesehen sein, dass er Halbleiterbauelemente aus Siliziumcarbid und/oder Galliumnitrid umfasst. Die Verwendung von Halbleiterbauelementen aus Siliziumcarbid und/oder Galliumnitrid ermöglicht es Gleichrichter, welche zum Umsatz von vergleichsweise hohen Leistungen geeignet sind, kleinbauend und leicht auszuführen, wodurch insbesondere eine Integration des Gleichrichters in ein Gehäuse des zweiten Anschlusselements vereinfacht wird.

Erfindungsgemäß kann vorgesehen sein, dass an dem ersten Anschlusselement und/oder an dem zweiten Anschlusselement jeweils wenigstens ein Temperatursensor angeordnet ist, wobei der Gleichrichter in Abhängigkeit wenigstens einer durch die Temperatursensoren gemessenen Temperatur betreibbar ist. Insbesondere kann vorgesehen sein, dass bei Überschreiten eines Temperaturgrenzwertes durch eine von einem der Temperatursensoren gemessene Temperatur eine vom Gleichrichter umgesetzte Leistung reduziert und/oder der Betrieb des Gleichrichters eingestellt wird. Auf diese Weise kann ein Überhitzen des Ladekabels und/oder ein Verschleiß des ersten Anschlusselements und/oder des zweiten Anschlusselements verhindert werden. Die Temperatursensoren können dazu beispielsweise mit einer Steuereinrichtung des Gleichrichters verbunden sein, wobei die Steuereinrichtung die von den Temperatursensoren erzeugten Temperaturmesswerte auswertet und den Betrieb des Gleichrichters in Abhängigkeit der durch wenigstens einen der Temperatursensoren gemessene Temperatur betreibt.

Zusätzlich oder alternativ dazu kann erfindungsgemäß vorgesehen sein, dass das Ladekabel wenigstens eine Signalleitung aufweist, über welche wenigstens eine Ladeinformation zwischen einer an dem ersten Anschlusselement angeschlossenen Ladeeinrichtung und dem Gleichrichter übermittelbar ist, wobei der Gleichrichter in Abhängigkeit der Ladeinformation betreibbar ist. Dies ermöglicht es, beispielsweise einen maximal von der an dem ersten Anschlusselement angeschlossenen Ladeeinrichtung abgebbaren elektrischen Strom beim Betrieb des Gleichrichters zu berücksichtigen.

Erfindungsgemäß kann vorgesehen sein, dass der Gleichrichter wenigstens ein Strommessmittel zur Messung wenigstens eines durch das Ladekabel fließenden Stromes und/oder wenigstens ein Spannungsmessmittel zur Messung wenigstens eines Spannungswertes des Wechselstroms und/oder des Gleichstroms aufweist. Die von dem Strommessmittel oder dem Spannungsmessmittel erzeugten Messwerte können beispielsweise von einer Steuereinrichtung des Gleichrichters ausgewertet werden, wobei eine Ansteuerung des Gleichrichters in Abhängigkeit der Messwerte erfolgen kann.

Weiterhin ist es möglich, dass bei Überschreiten eines Spannungsmesswertes und/oder eines Strom messwertes ein Abschalten des Gleichrichters und/oder ein Auslösen einer Schutzschaltung des Ladekabels, beispielsweise eines FI-Schaltes, erfolgt.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine schematische Darstellung eines ersten Ausführungsbeispiels eines erfindungsgemäßen Ladekabels,
- Fig. 2: eine schematische Darstellung eines zweiten Ausführungsbeispiels eines erfindungsgemäßen Ladekabels, und
- Fig. 3: ein schematischer Schaltplan eines dritten Ausführungsbeispiels eines erfindungsgemäßen Ladekabels.

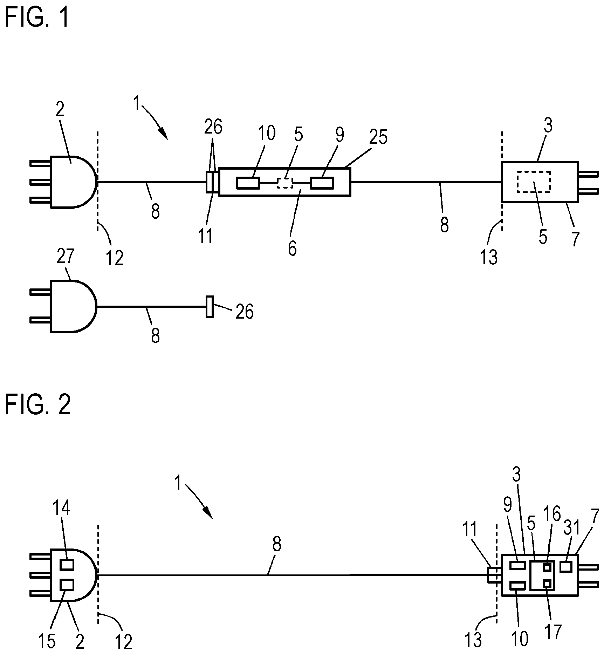

In Fig. 1 ist ein erstes Ausführungsbeispiel eines Ladekabels 1 dargestellt. Das Ladekabel 1 umfasst ein erstes Anschlusselement 2, welches zum Verbinden mit einer fahrzeugexternen Energiequelle ausgebildet ist. Bei der fahrzeugexternen Energiequelle kann es sich um eine Ladesäule, eine Wallbox oder eine Steckdose eines Wechselstromnetzwerks handeln. Das Ladekabel 1 umfasst weiterhin ein zweites Anschlusselement 3, welches zum Verbinden mit einer Ladebuchse eines einen elektrischen Traktionsenergiespeicher umfassenden Kraftfahrzeuges ausgebildet ist. Das zweite Anschlusselement 3 ist dabei derart ausgeführt, dass es mit einer zum Gleichstromladen ausgebildeten Ladebuchse des Kraftfahrzeugs, beispielsweise bzw. mit einen zum Gleichstromladen ausgebildeten Abschnitt einer Ladebuchse des Kraftfahrzeugs verbindbar ist. Das zweite Anschlusselement kann beispielsweise als CHAdeMO-Stecker oder als CCS-Stecker ausgeführt sein.

Weiterhin umfasst das Ladekabel 1 einen Gleichrichter 5, welcher entweder in einem ein Gehäuse 25 aufweisenden Aufnahmeabschnitt 6 des Ladekabels 1 oder im Inneren eines Gehäuses 7 des zweiten Anschlusselements 3 angeordnet ist. Der Gleichrichter 5 dient dazu, einen über das erste Anschlusselement 2 in das Ladekabel 1 eingespeisten Wechselstrom bzw. eine Wechselspannung gleichzurichten, so dass über den erzeugten Gleichstrom bzw. über die erzeugte Gleichspannung ein Traktionsenergiespeicher eines an das zweite Anschlusselement 3 angeschlossenen Kraftfahrzeuges geladen werden kann.

Der Aufnahmeabschnitt 6 ist mit dem ersten Anschlusselement 2 und dem zweiten Anschlusselement 3 jeweils über einen Kabelabschnitt 8 verbunden. Die Kabelabschnitte umfassen jeweils mehrere Leiter bzw. Adern, die von einer gemeinsamen, isolierenden Hülle umgeben sind. Die Anzahl der Adern kann sich dabei nach der Ausführung des ersten Anschlusselements 2 richten und/oder danach ob Gleichstrom oder einphasiger oder mehrphasiger Wechselstrom über den jeweiligen Kabelabschnitt 8 übertragen wird. Der Aufnahmeabschnitt 6 umfasst weiterhin ein beispielsweise als Transformator oder als Gleichspannungswandler ausgeführtes Mittel 9 zur galvanischen Trennung sowie eine Sicherheitsschaltung 10, welche die elektrische Verbindung zwischen dem ersten Anschlusselement 2 und dem zweiten Anschlusselement 3 beispielsweise bei Auftreten eines zu hohen Stromes in dem Ladekabel 1 unterbrechen kann. Als Sicherheitsschaltung kann beispielsweise eine Strombegrenzungsschaltung und/oder ein FI-Schalter oder eine Sicherung verwendet werden.

Weiterhin umfasst das Ladekabel 1 eine als zwei Kupplungsabschnitte 26 umfassende Kupplung ausgebildete Schnittstelle 11, über welche das erste Anschlusselement 2 lösbar an dem Ladekabel 1 befestigt ist. Die Schnittstelle kann, wie in Fig. 1 dargestellt ist, an dem Aufnahmeabschnitt 6 angeordnet sein. Dabei ist ein Kupplungsabschnitt 26 an dem Aufnahmeabschnitt und eine Kupplungsabschnitt 26 an dem mit dem ersten Anschlusselement 2 verbundenen Kabelabschnitt 8 angeordnet. Alternativ dazu kann die Schnittstelle 11 auch an der durch die Linie 12 gekennzeichneten Position an dem ersten Anschlusselement 2 angeordnet sein. In diesem Fall ist ein Kupplungsabschnitt 26 am ersten Anschlusselement 2 und ein Kupplungsabschnitt 26 am Kabelabschnitt 8 angeordnet. Weiterhin möglich ist, dass die Schnittstelle 11 alternativ an der durch die Linie 13 gekennzeichneten Position an dem zweiten Anschlusselement 3 angeordnet ist, wobei ein Kupplungsabschnitt 26 am zweiten Anschlusselement 3 und ein Kupplungsabschnitt 26 am Kabelabschnitt 8 angeordnet ist.

Über die Schnittstelle 11 können verschieden ausgeführte erste Anschlusselemente 2 lösbar mit dem Ladekabel 1 verbunden werden. Dies ermöglicht ein Verbinden des Ladekabels 1 mit verschiedenen Typen von Wechselstromquellen bzw. Wechselstromnetzwerken. Ein Anschluss an eine zweiphasige oder dreiphasige Wechselstromquelle kann beispielsweise über ein als CEE-Stecker ausgeführtes ersten Anschlusselement 2 erfolgen. Alternativ kann eine Verbindung mit einer einphasigen Wechselstromquelle mit einem beispielsweise als Schutzkontaktstecker ausgeführten, weiteren ersten Anschlusselement 27 vorgenommen werden. Das weitere erste Anschlusselement 27 ist dazu über einen Kabelabschnitt 8 mit einem Kopplungsabschnitt 26 verbunden und kann statt des ersten Anschlusselements 2 über die Schnittstelle 11 mit dem Ladekabel 1 verbunden werden, so dass das Ladekabel 1 zum Laden über eine einphasige, mit dem weiteren Anschlusselement 27 verbindbare Wechselstromquelle verwendet werden kann.

In Fig. 2 ist ein zweites Ausführungsbeispiel eines Ladekabels 1 dargestellt. In diesem Ausführungsbeispiel ist der Gleichrichter 5 im Inneren des Gehäuses 7 des zweiten Anschlusselements 3 angeordnet. Weiterhin sind in dem Gehäuse 7 des zweiten Anschlusselementes 3 das Mittel zur galvanischen Trennung 9 sowie die elektrische Sicherheitsschaltung 10 angeordnet. Die Schnittstelle 11 ist an der mit der Linie 13 markierten Position am zweiten Anschlusselement angeordnet. Alternativ ist in diesem Ausführungsbeispiel eine Anordnung der Schnittstelle 11 an der mit der Linie 12 markierten Position am ersten Anschlusselement 2 möglich.

Durch die lösbare Verbindung des ersten Anschlusselements 2 bzw. des ersten Anschlusselements 2 und dem Kabelabschnitt 8, wird es ermöglicht, verschiedene erste Anschlusselemente 2 mit dem zweiten Anschlusselement 3 bzw. mit dem Kabelabschnitt 8 und dem zweiten Anschlusselement 3 zu verbinden. Dies ermöglicht es, abhängig von einer zur Verfügung stehenden Lademöglichkeit ein passendes erstes Anschlusselement auszuwählen und über die Schnittstelle 11 lösbar an dem Ladekabel zu befestigen.

Das erste Anschlusselement 2 umfasst weiterhin einen Widerstand 14 als Widerstandskodierung. Der Widerstandswert des Widerstands 14 kann beispielsweise von einer Steuereinrichtung des Gleichrichters 5 über wenigstens eine Signalleitung des Kabelabschnitts 8 ausgelesen werden, wobei der Gleichrichter 5 in Abhängigkeit dieses Widerstandswerts betrieben werden kann. Dies ermöglicht es, beispielsweise bei der Verwendung eines ersten Anschlusselements 2, welches zur Verbindung mit einem einphasigen Wechselstromnetzwerk ausgebildet ist, entsprechend einer einphasigen Gleichrichtung zu betreiben. Das erste Anschlusselement 2 kann dabei beispielsweise als ein Schutzkontaktstecker ausgeführt werden, wobei dieser Ausführungsform ein bestimmter Widerstandswert des Widerstands 14 zugewiesen ist. Entsprechend können über andere Widerstandswerte des Widerstands 14 auch weitere Ausführungsformen des ersten Anschlusselements 2 kodiert werden, welche beispielsweise eine Verbindung zu zweiphasigen oder dreiphasigen Wechselstromnetzwerken ermöglichen. Entsprechend kann in diesen Fällen der Gleichrichter 5 zur Gleichrichtung eines zweiphasigen bzw. dreiphasigen Wechselstroms betrieben werden.

Weiterhin sind im ersten Anschlusselement 2 ein Temperatursensor 15 sowie im zweiten Anschlusselement 3 ein Temperatursensor 31 angeordnet, wobei der Gleichrichter in Abhängigkeit wenigstens einer durch einen der Temperatursensoren 15, 31 gemessenen Temperatur betreibbar ist. Beispielsweise ist es möglich, dass bei Überschreiten eines Temperaturmesswerts durch einen von einem der Temperatursensoren 15, 31 gemessenen Temperaturwert ein durch das Ladekabel 1 fließender Strom durch Ansteuerung des Gleichrichters 5 reduziert und/oder abgeschaltet wird, so dass eine Beschädigung oder ein Verschleiß des Ladekabels 1, insbesondere des ersten Anschlusselements 2 und/oder des zweiten Anschlusselements 3, vermieden werden können. Der Gleichrichter 5 umfasst ein Strommessmittel 16 sowie ein Spannungsmessmittel 17, welches zur Messung eines durch das Ladekabel 1 fließenden Stromes bzw. zur Messung wenigstens eines Spannungswertes der Wechselstroms und/oder des Gleichstroms dienen. Bei Auftreten einer zu hohen Spannung bzw. eines zu hohen Stromes kann eine Anpassung des Betriebs des Gleichrichters 5 erfolgen und/oder ein Abschalten des Gleichrichters 5 vorgenommen werden.

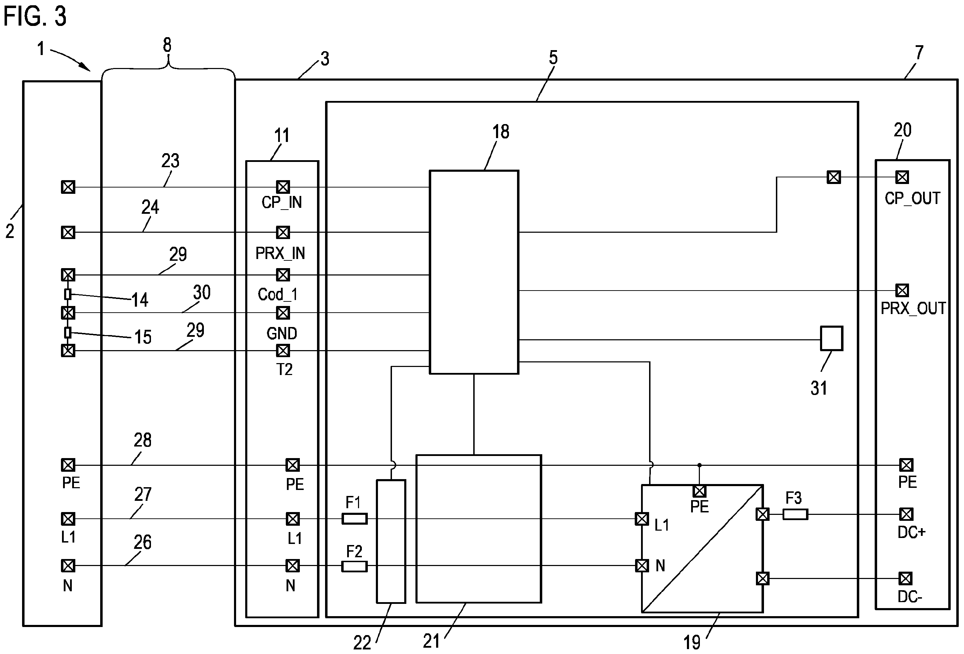

In Fig. 3 ist ein schematisches Schaltbild eines dritten Ausführungsbeispiels eines Ladekabels 1 dargestellt, welches zum Verbinden mit einer einphasigen Wechselstromquelle dient. Der in das Gehäuse 7 des zweiten Anschlusselements 3 integrierte Gleichrichter 5 umfasst eine als Mikrocontroller ausgeführte Steuerungseinrichtung 18, welche mit einer Gleichrichtereinheit 19 verbunden ist. Die Gleichrichtereinheit 19 dient der Gleichrichtung einer einphasigen Wechselspannung, welche von dem ersten Anschlusselement 2 über den Kabelabschnitt 8 an das zweite Anschlusselement 3 übertragen wird. Dazu weist der Kabelabschnitt 8 eine erste Leitung 26 für den Neutralleiter (N), eine zweite Leitung 27 für die Phase des Wechselstroms (L1) und eine dritte Leitung 28 für den Schutzleiter (PE) auf. Bei einem zum Verbinden mit einer zweiphasigen oder dreiphasigen Wechselstromquelle ausgebildeten Ladekabel 1 ist es möglich, dass zusätzlich jeweils ein weiterer Leiter für eine zweite Phase und eine dritte Phase eines dreiphasigen Wechselstroms vorgesehen ist.

Der vom ersten Anschlusselement 2 an den Gleichrichter 5 übertragene Wechselstrom wird durch die Gleichrichtereinheit 19 des Gleichrichters 5 in einen Gleichstrom umgewandelt. Die Gleichrichtereinheit 19 ist mit ihrer Gleichspannungsseite mit zwei der für die Verbindung des Ladekabels 1 mit der Ladebuchse eines Kraftfahrzeugs vorgesehenen Kontakte 20 (DC+ und DC-) des zweiten Anschlusselements 3 verbunden. Um eine möglichst geringe Größe des Gleichrichters 5 zu erzielen, umfasst die Gleichrichtereinheit 19 Halbleiterbauelemente aus Siliziumcarbid und/oder Galliumnitrid.

Der Gleichrichter 5 umfasst weiterhin eine Schaltung 21 zur Fehlerstrommessung sowie eine Schaltung 22, welche der Stromversorgung der Steuereinrichtung 18 dient. Der im ersten Anschlusselement 2 vorgesehene Widerstand 14 zur Widerstandskodierung des Typs des ersten Anschlusselements 2 sowie der im ersten Anschlusselement 2 vorgesehene Temperatursensor 15 sind jeweils ebenfalls über eine Signalleitung 29 des Kabelabschnitts 18 über die Schnittstelle 11 mit der Steuerungseinrichtung 18 verbunden. Weiterhin vorgesehen ist eine Masseleitung 30 (GND) sowie zwei weitere Signalleitungen 23, 24 (CP_in und PRX). Die Signalleitung 23 kann zur Kommunikation zwischen der Steuereinrichtung 18 und einer an dem ersten Anschlusselement 2 verbundenen Ladestation verwendet werden. Beispielsweise können dazu Ladeinformationen zwischen der Steuereinrichtung 18 und der Ladestation übermittelt werden, wie sie in internationalen Standards vorgesehen sind. Die Signalleitung 24 kann dazu verwendet werden, um beispielsweise über eine Widerstandcodierung, Informationen bezüglich einer maximal zulässigen Stromstärke für das erste Anschlusselement 2 oder den Kabelabschnitt 8 zu erhalten. Zur Übermittlung von entsprechenden Informationen ist die Steuerungseinrichtung 18 mit für die Signalübertragung vorgesehenen Kontakten (CP_out, PRX_out) der Kontakte 20 verbunden.

Über einen Temperatursensor 31 kann von der Steuereinrichtung 18 eine Temperatur des zweiten Anschlusselements 3 gemessen werden. Bei einer zu hohen gemessenen Temperatur des zweiten Anschlusselements 3 oder einer zu hohen, über den Temperatursensor 15 gemessenen Temperatur des ersten Anschlusselements 2, kann eine Reduzierung und/oder Abschaltung eines über das Ladekabel 1 übertragenen Stromes durch Ansteuerung der Gleichrichtereinheit 19 erfolgen. Zur Vermeidung von zu hohen Stromstärken umfasst der Gleichrichter 5 weiterhin drei Sicherungen F1, F2 und F3.

Abhängig von dem über den Widerstandswert des Widerstand 14 bestimmbaren Typs des ersten Anschlusselements 2 kann der Gleichrichter 5 durch eine Ansteuerung der Gleichrichtereinheit 19 durch die Steuereinrichtung 18 betrieben werden. Eine gegebenenfalls vorhandene zweite Phase und/oder eine gegebenenfalls vorhandene dritte Phase einer Wechselstromquelle kann über zusätzliche, nicht dargestellte Kontakte der Schnittstelle 11 jeweils mit der Wechselstromseite der Gleichrichtereinheit 19 verbunden werden, so dass bei Anschluss des ersten Anschlusselements 2 an eine Ladestation, welche einen zweiphasigen oder einen dreiphasigen Wechselstrom bereitstellt, eine Gleichrichtung aller Phasen des Wechselstroms erfolgen kann.

## Patentansprüche

1. Ladekabel umfassend einen Gleichrichter (5) sowie ein erstes Anschlusselement (2) und ein zweites Anschlusselement (3), wobei das erste Anschlusselement (2) zum Verbinden mit einer fahrzeugexternen Energiequelle und das zweite Anschlusselement (3) zum Verbinden mit einer Ladebuchse eines einen elektrischen Traktionsenergiespeicher umfassenden Kraftfahrzeugs ausgebildet ist, wobei durch den Gleichrichter ein an dem ersten Anschlusselement (2) eingespeister Wechselstrom in einen an dem zweiten Anschlusselement (3) abgebbaren Gleichstrom wandelbar ist,
**dadurch gekennzeichnet,**
**dass** das erste Anschlusselement (2) über eine Schnittstelle (11) des Ladekabels (1) lösbar an dem Ladekabel (1) befestigt ist.

2. Ladekabel nach Anspruch 1,
**dadurch gekennzeichnet,**
**dass** das erste Anschlusselement (2) wenigstens einen Widerstand (14) als Widerstandskodierung aufweist, wobei der Gleichrichter (5) in Abhängigkeit des Widerstandswerts des wenigstens einen Widerstands (14) betreibbar ist.

3. Ladekabel nach Anspruch 1 oder 2,
**dadurch gekennzeichnet,**
**dass** die Schnittstelle (11) als eine Kupplung ausgeführt ist.

4. Ladekabel nach einem Ansprüche 1 bis 3,
dass die Schnittstelle (11) an dem ersten Anschlusselement (2) angeordnet ist.

5. Ladekabel nach einem Ansprüche 1 bis 3,
dass die Schnittstelle (11) an einem eine Schutzschaltung aufnehmenden, in das Ladekabel integrierten und mit dem zweiten Anschlusselement (3) fest verbundenen Aufnahmeabschnitt (16) des Ladekabels (1) angeordnet ist.

6. Ladekabel nach einem der Ansprüche 1 bis 3,
dass die Schnittstelle (11) an dem zweiten Anschlusselement (3) angeordnet ist.

7. Ladekabel nach einem der vorangehenden Ansprüche,
**dadurch gekennzeichnet,**
**dass** der Gleichrichter (5) in einem Gehäuse (7) des zweiten Anschlusselements (3) angeordnet ist.

8. Ladekabel nach einem der vorangehenden Ansprüche,
**dadurch gekennzeichnet,**
**dass** wenigstens ein Mittel zur galvanischen Trennung und/oder wenigstens eine elektrische Sicherheitsschaltung in dem Gehäuse (7) des zweiten Anschlusselements (3) angeordnet sind.

9. Ladekabel nach einem der vorangehenden Ansprüche,
**dadurch gekennzeichnet,**
**dass** der Gleichrichter (5) Halbleiterbauelemente aus Siliziumcarbid und/oder Galliumnitrid umfasst.

10. Ladekabel nach einem der vorangehenden Ansprüche,
**dadurch gekennzeichnet,**
**dass** an dem ersten Anschlusselement (2) und/oder an dem zweiten Anschlusselement (3) jeweils wenigstens einen Temperatursensor (15, 31) angeordnet ist, wobei der Gleichrichter (5) in Abhängigkeit wenigstens einer durch die Temperatursensoren (15, 31) gemessenen Temperatur betreibbar ist.

11. Ladekabel nach einem der vorangehenden Ansprüche,
**dadurch gekennzeichnet,**
**dass** das Ladekabel (1) wenigstens eine Signalleitung (23, 24) aufweist, über welche wenigstens eine Ladeinformation zwischen einer an dem ersten Anschlusselement (2) angeschlossenen Ladeeinrichtung und dem Gleichrichter (5) übermittelbar ist, wobei der Gleichrichter (5) in Abhängigkeit der Ladeinformation betreibbar ist.

12. Ladekabel nach einem der vorangehenden Ansprüche,
**dadurch gekennzeichnet,**
**dass** der Gleichrichter (5) wenigstens ein Strommessmittel (16) zur Messung wenigstens eines durch das Ladekabel fließenden Stromes und/oder wenigstens ein Spannungsmessmittel (17) zur Messung wenigstens eines Spannungswertes des Wechselstroms und/oder des Gleichstroms aufweist.
